# EUROPÄISCHE PATENTSCHRIFT

(11) **EP 1 798 485 B1**
(45) Veröffentlichungstag und Bekanntmachung des Hinweises auf die Patenterteilung: **02.04.2008**
(21) Anmeldenummer: 06019957.7
(22) Anmeldetag: 23.09.2006
(51) Int. Cl.: F24D 3/10, E03C 1/02, F16L 47/00, E03B 7/07, F16K 27/00, F16L 41/02, F16K 11/00

(54) **Flüssigkeitsverteiler**
Liquid distributor
Distributeur de liquide

(30) Priorität: 13.12.2005 DE 20519429 U
(43) Veröffentlichungstag der Anmeldung: 20.06.2007
(73) Patentinhaber: SBK Siegfried Böhnisch Kunststofftechnik GmbH, 74632 Neuenstein (DE)
(72) Erfinder: Böhnisch, Andreas A., 74196 Neuenstadt (DE)
(74) Vertreter: Geitz Truckenmüller Lucht

(56) Entgegenhaltungen:
- EP-A1- 0 458 076
- EP-A1- 1 431 673
- DE-A1- 3 043 422

## Beschreibung

Die Erfindung betrifft einen Flüssigkeitsverteiler, insbesondere Wasserverteiler, gemäß dem Oberbegriff von Anspruch 1.

Derartige Flüssigkeitsverteiler sind beispielsweise aus der DE 20 2004 007 669 U1 und der DE 30 43 422 A1 bekannt geworden und können aus mehreren Verteilerventilen aufgebaut sein.

Wasserverteiler, die mit einem oder als ein Flüssigkeitsverteilerventil gestaltet sind, die auch mit einem Flüssigkeits-Durchflussmesser versehen sein können, sind seit vielen Jahren beispielsweise aus der DE 35 09 718 A1, der DE 196 08 780 A1 und der DE 101 14 926 A1 bekannt geworden.

Derartige Flüssigkeitsverteiler können auch eine Verteileranordnung ausbilden, wie sie zum Beispiel aus der DE 296 24 491 U1 hervorgeht.

Die aus Kunststoff bestehenden Gehäuse dieser Flüssigkeitsverteiler sind bislang mit einer oder mehreren Anschlussbuchsen aus Metall, insbesondere aus Messing versehen, die jeweils mit einem Außengewinde zum Anschluss einer als Rohr ausgebildeten Abzweigleitung versehen sind und die in das Gehäuse eingeformt bzw. eingegossen oder eingespritzt sind. Dies wurde bislang als vorteilhaft erachtet, weil bei dem Anziehen der Verbindungsmittel zwischen dem Rohr und der Anschlussbuchse große Kräfte ausgeübt werden.

Verteilerventile mit Flüssigkeits-Durchflussmesser sind beispielsweise auch aus der DE 94 04 156 U1 bekannt geworden. Bei diesen besteht das den Hauptleitungsabschnitt umschließende Gehäuse aus Metall und weist ein Innengewinde auf, in das ein mit Außengewinde versehener Anschluss aus Metall eingeschraubt ist, der einstückig mit einem radial nach innen in die Hauptleitung ragenden Abzweigrohr gestaltet ist.

Die bisher verwendeten Messing-Anschlussbuchsen können abhängig von den Umgebungsbedingungen einer Spannungsrisskorrosion unterliegen, infolgedessen es zu Undichtigkeiten kommen kann, bis hin zu einem Brechen dieser Anschlussbuchsen. Außerdem kann es an den bisher eingesetzten Messing-Anschlussbuchsen bei niedrigen Umgebungstemperaturen zu einer störenden Kondenswasserbildung kommen. Ferner kann der Einsatz dieser Messing-Anschlussbuchsen zu Wärmeverlusten führen.

Demgemäß ist es eine Aufgabe der Erfindung, einen Flüssigkeitsverteiler der eingangs genannten Art zu Verfügung zu stellen, bei dem die vorstehend bezeichneten Nachteile vermieden werden und der dennoch vergleichsweise einfach und kostengünstig herstellbar ist.

Diese Aufgabe ist bei einem Flüssigkeitsverteiler mit den Merkmalen des Oberbegriffs von Anspruch 1 gelöst durch die Merkmale des kennzeichens von Anspruch 1.

Durch diese vermeintlich einfach erscheinende Maßnahme wird eine Spannungsrisskorrosion, wie sie beispielsweise bei einem Einbau des Flüssigkeitsverteilers in Neubauten auftreten kann, wo es zu einem Ausgasen von Ammoniakgasen aus frischem Beton kommen kann, verhindert. Außerdem kann dadurch eine vorteilhafte Isolation des Verteilers von den Abzweigleitungen erreicht werden und störende Kondenswasserbildungen können vermieden werden. Eine derartige Ausgestaltung bietet auch vorteilhafte Möglichkeiten für eine Abdichtung zur Abzweigleitung hin.

In besonders vorteilhafter Ausgestaltung kann ferner vorgesehen sein, dass der Anschluss und das Gehäuse aus einem thermoplastischen Kunststoff bestehen und in einem Arbeitsgang durch Spritzgießen hergestellt sind.

Die vorstehende Maßnahme ermöglicht eine noch kostengünstigere Herstellung. Ferner werden dadurch Lockerungen in dem Bereich zwischen dem Anschluss und dem Gehäuse vermieden bzw. verhindert.

Es kann ferner vorgesehen sein, dass die Anschlussleitung und/oder der Anschlussadapter aus Kunststoff besteht bzw. bestehen, wobei vorzugsweise die Anschlussleitung und/oder der Anschlussadapter aus dem selben Kunststoff besteht bzw. bestehen wie der Anschluss und/oder das Gehäuse. Dies ermöglicht eine kostengünstige Herstellung und ferner ergeben sich dadurch vorteilhafte Möglichkeiten für eine klemmfreie Montage bzw. Demontage sowie für eine gute Abdichtung auch über lange Zeit. Die Abdichtung lässt sie weiter verbessern, wenn die Innengewindebohrung der Durchgangsöffnung des Anschlusses zum Hauptleitungsabschnitt hin durch einen ringförmigen Vorsprung begrenzt ist, der eine nach außen offene Ringnut zur Aufnahme einer Ring-Dichtung, vorzugsweise einer O-Ring-Dichtung aufweist.

Vorteilhafte Ausgestaltungen des erfindungsgemäßen Flüssigkeitsverteilers mit einem erweiterten Einsatzspektrum können dadurch erreicht werden, dass der Flüssigkeitsverteiler mit einem Wasserverteilerventil, vorzugsweise mit Durchflussmesser, gestaltet ist, wobei vorzugsweise das Flüssigkeitsverteilerventil ein radial zu dem Hauptleitungsabschnitt angeordnetes, wenigstens teilweise in diesem liegendes Abzweigrohr aufweist das mit dem oder einem Anschluss zum Anschließen der oder einer Abzweigleitung versehen ist und das einen verschließbaren Ventilsitz aufweist.

Weitere Vorteile, Merkmale und Gesichtspunkte der Erfindung ergeben sich aus den abhängigen Ansprüchen und dem nachfolgenden Beschreibungsteil, in dem ein vorteilhaftes Ausführungsbeispiel der Erfindung anhand der Figuren beschrieben ist.

Es zeigen:

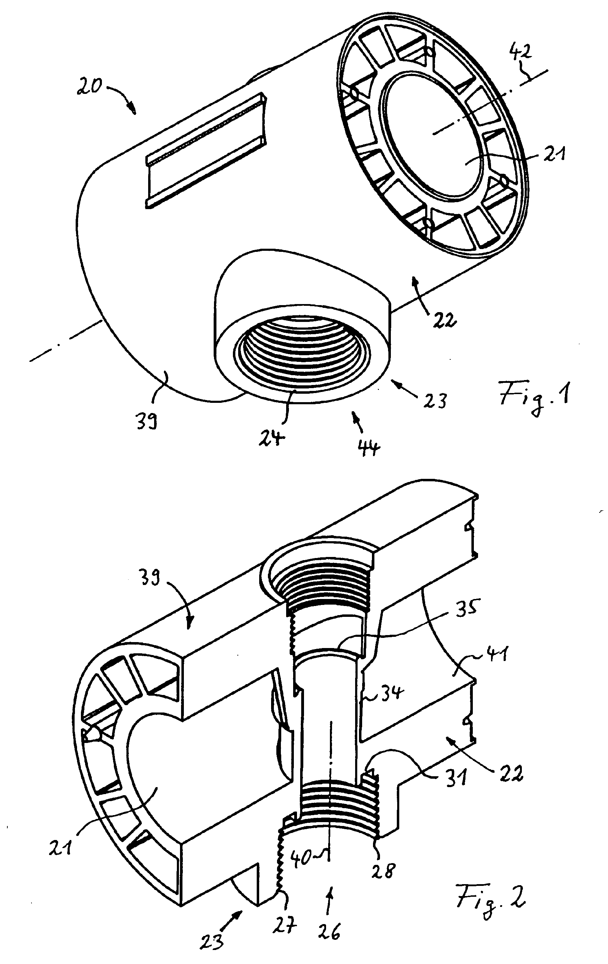

- Figur 1: eine dreidimensionale Ansicht eines erfindungsgemäßen Flüssigkeitsverteilers;
- Figur 2: eine dreidimensionale Ansicht eines Längsschnitts durch den Flüssigkeitsverteiler gemäß Figur 1;

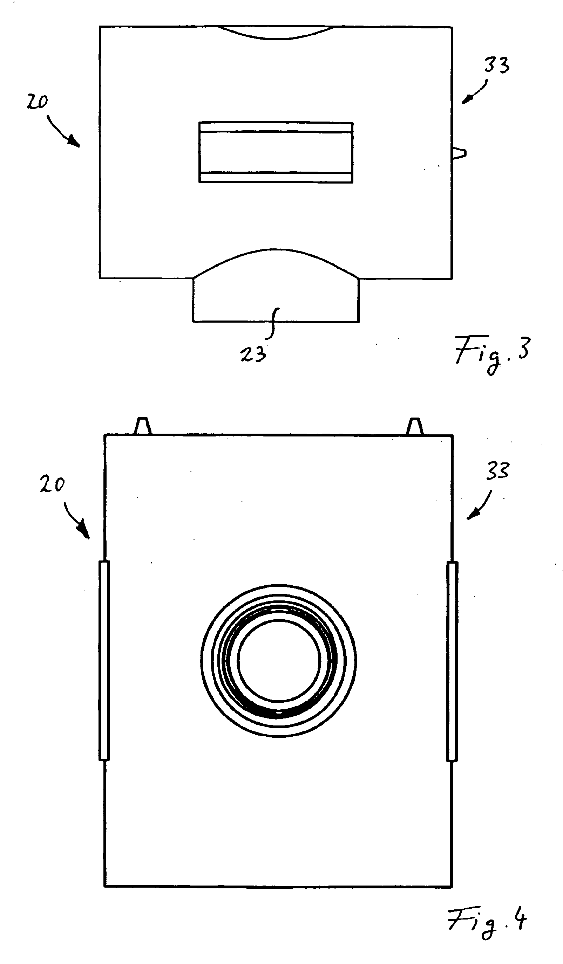

- Figur 3: eine Draufsicht des Flüssigkeitsverteiler gemäß Figur 1;
- Figur 4: eine Oberansicht des Flüssigkeitsverteilers gemäß Figur 1;

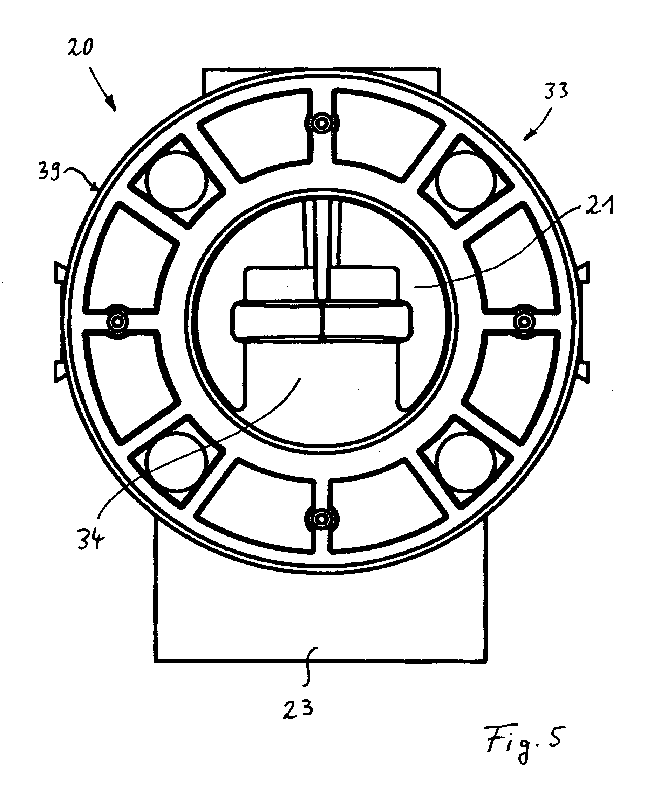

- Figur 5: eine Seitenansicht des Flüssigkeitsverteilers gemäß Figur 1 von rechts;
- Figur 6: einen Längsschnitt durch den Flüssigkeitsverteiler gemäß Figur 1;
- Figur 7: einen Anschlussadapter zum Anschluss an den Anschluss des Flüssigkeitsverteilers und zum Anschluss einer Abzweigleitung;
- Figur 8: einen Längsschnitt durch den Flüssigkeitsverteiler gemäß Figur 1 mit daran angeschlossenem Anschlussadapter gemäß Figur 7.

Der erfindungsgemäße Verteiler besteht aus einem Verteilersegment, von dem mehrere gleichartig oder ähnlich gestaltet in Reihe aneinandergesetzt sein können. Solche Verteilersegmente können insbesondere in Warmwasserheizungsanlagen oder in der Nähe von Gebäuden oder auch im Bereich von Erdsonden vorteilhaft eingesetzt werden. Derartige Verteiler können eine Verteileranordnung ausbilden, wie sie zum Beispiel aus der DE 296 24 491 U1 hervorgeht. Sie können jedoch auch mit zusätzlichen Funktionalitäten ausgestattet sein, wenn sie, wie eingangs erwähnt, beispielsweise mit einem oder mehreren Verteilerventilen und/oder mit einem oder mehreren Flüssigkeitsdurchflussmessern versehen sind, wie sie beispielsweise aus der DE 20 2004 007 669 U1, der DE 30 43 422 A1, der DE 35 09 718 A1, der DE 196 08 780 A1, der DE 101 14 926 A1 oder der DE 94 04 156 U1 hervorgehen.

Der Verteiler 20 weist ein Gehäuse 22 auf, das aus Kunststoff, vorzugsweise aus Polyamid oder Polypropylen, insbesondere mit Glasfaserverstärkung besteht. Das Gehäuse 22 ist mit einer hier im Wesentlichen kreiszylindrischen Außenkontur 39 gestaltet, kann jedoch auch beispielsweise eine im Wesentlichen quader- oder würfelförmige Außenkontur aufweisen.

Das Gehäuse 22 umschließt einen überwiegend kreiszylindrischen Hauptleitungsabschnitt 21. Innerhalb des Hauptleitungsabschnittes 21 erstreckt sich ein auch als Abzweigrohr 34 bezeichneter Leitungszapfen, das bzw. der einstückig in das Gehäuse 22 eingeformt bzw. eingespritzt ist. Die Längsachse 40 des Abzweigrohrs 34 verläuft senkrecht zur Innenwand 41 des Hauptleitungsabschnitts 21 und schneidet die zentrale Längsachse 42 des Hauptleitungsabschnittes 21 ebenfalls senkrecht. Das Abzweigrohr 34 weist einen verschließbaren Ventilsitz 35 für ein in den Figuren nicht näher gezeigtes Einstell- und Absperrelement zum Einstellen und ggf. Absperren des Fluidstromes von der Hauptleitung bzw. von dem Hauptleitungsabschnitt 21 in das Abzweigrohr 34 des Verteilerventils 33 und/oder umgekehrt auf. Es sind also Mittel vorgesehen, die eine Regelung oder ein vollständiges Unterbinden des Flusses von dem Hauptleitungsabschnitt 21 in das Abzweigrohr 34 oder umgekehrt ermöglichen. Das Verschluss- und Regulierelement bzw. das Einstell- und Absperrelement kann mit einem Dichtelement, insbesondere einem Dichtkegel gebildet sein, mit dem der Ventilsitz 35 verschließbar ist. Das Verschließ- und Regulierelement bzw. das Einstell- und Absperrelement kann auch mit einem Durchflussmesser versehen sein, wie bereits vorstehend erwähnt.

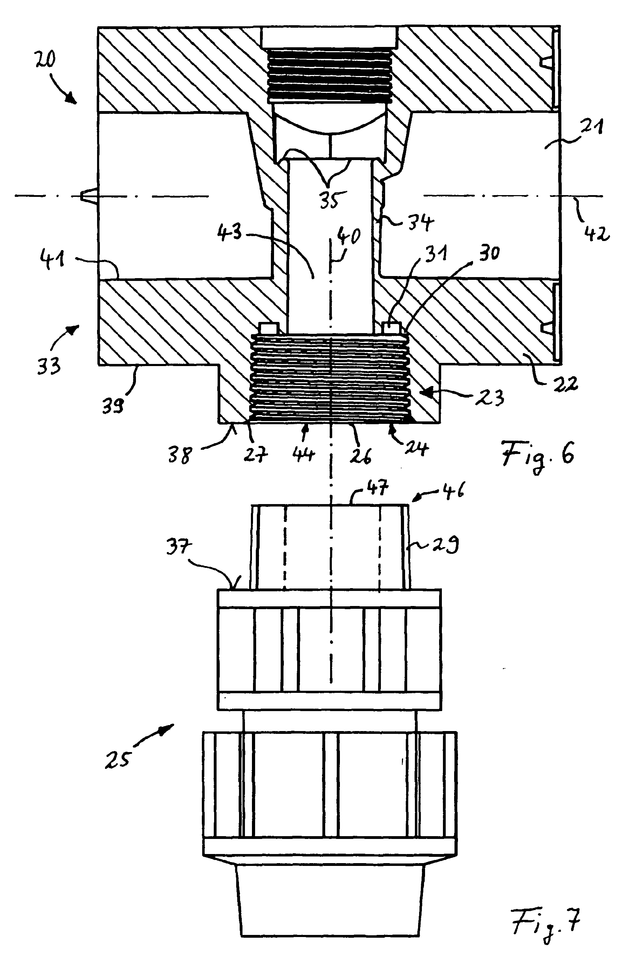

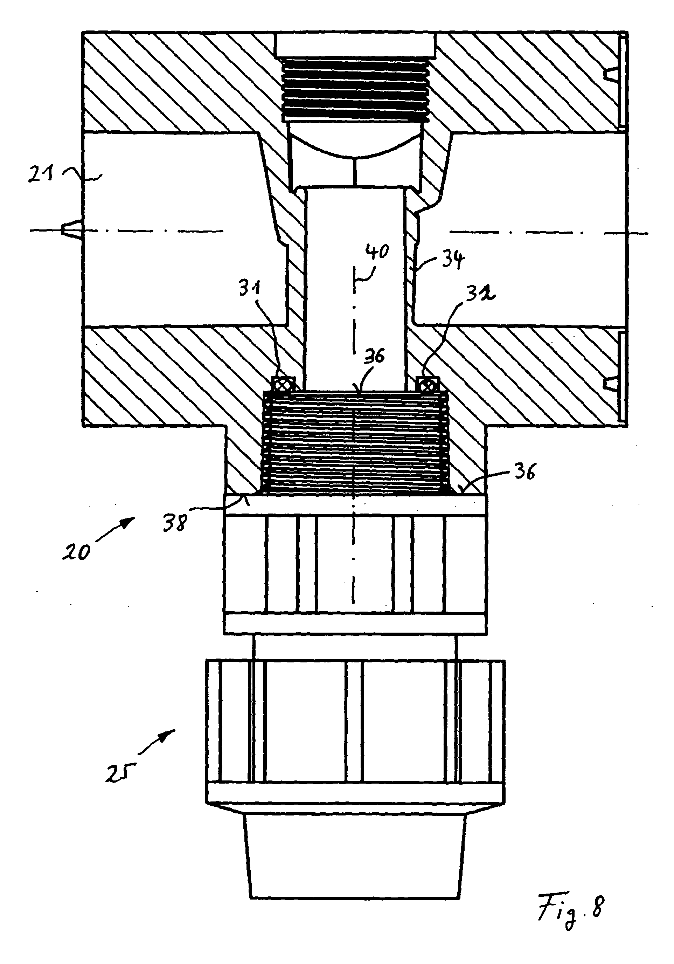

Das Abzweigrohr 34 steht über eine untere Gehäuseöffnung 43 mit einem koaxial zur Längsachse 40 angeordneten Anschluss 23 in Verbindung, der mit einem ein Anschlussgewinde 24 ausbildenden Innengewinde 28 einer Innengewindebohrung 27 zum Anschließen einer Abzweigleitung bzw. eines in den Figuren 7 und 8 gezeigten Anschlussadapters 25 für eine Abzweigleitung dient.

Der Anschluss 23 ist einstückig mit dem Gehäuse 22 verbunden und besteht aus demselben Kunststoff, wie das Gehäuse 22. Der Anschluss 23 und das Gehäuse 22 werden vorzugsweise in einem Arbeitsgang durch Spritzgießen hergestellt. Mit anderen Worten ist der Anschluss 23 mit seinem Innengewinde einstückig an bzw. in das Gehäuse 22 an- bzw. eingeformt.

Der Anschluss 23 weist eine Durchgangsöffnung 26 bzw. Durchgangsbohrung auf, die sowohl zum Hauptleitungsabschnitt 21 hin als auch zu seinem Anschlussende 44 für die Abzweigleitung bzw. für den Anschlussadapter 25 für die Abzweigleitung hin offen ist. Die Durchgangsöffnung 26 des Anschlusses 23 weist eine Innengewindebohrung 27 auf, deren Innengewinde 28 einstückig mit dem Anschluss 23 bzw. mit dem Gehäuse 22 gebildet ist. Das Innengewinde 28 ist hier zu dem Hauptleitungsabschnitt 21 hin durch einen ringförmigen Vorsprung 30 bzw. durch eine nach innen ragende Stufe begrenzt. Es versteht sich jedoch, dass das Innengewinde der Innengewindebohrung auch bis zum Hauptleitungsabschnitt 21 durchlaufen kann. In diesem Fall muss jedoch ein separates Abzweigrohr eingesetzt werden. Dieses Abzweigrohr kann mit einem Außengewinde versehen sein, mit dem es in das Innengewinde des Anschlusses eingesetzt werden kann.

Wie aus den Figuren 7 und 8 ersichtlich, weist der ringförmige Vorsprung 30 eine Ringnut 31 auf, in dem eine vorzugsweise als O-Ring gestaltete Ring-Dichtung 32 aufgenommen sein kann (Figur 8).

Der Anschluss 23 weist eine ringförmige Anlagefläche 38 auf. Diese ist hier senkrecht zu der Längsachse 40 des Anschlusses 23 ausgebildet, kann aber auch beispielsweise konisch oder gerundet gestaltet sein. An dieser Anlagefläche 38 kann eine ringförmige Anlagefläche 37 eines Anschlussadapters 25 zur Anlage gebracht werden. An dem vorderen Einschraubende 46 des eine Durchgangsöffnung 47 aufweisenden Anschlussadapters 25 befindet sich eine Ring-Stirnfläche 36. Nach dem Einschrauben des Anschlussadapters 25 in die Innengewindebohrung 27 des Anschlusses 23 und nach der Anlage dessen Anlagefläche 37 an der dann gegenüberliegenden Anlagefläche 38 des Anschlusses 23 befindet sich die Ring-Stirnfläche 36 des Anschlusses 23 in einem geringen Abstand von dem Vorsprung 30 in einer definierten Lage relativ zu der Ring-Dichtung 32 derart, dass letztere unter gleichzeitiger Abdichtung der Spalträume zwischen dem Anschlussadapter 25 und dem Anschluss 23 elastisch zusammengepresst wird, wie in Figur 8 angedeutet. Auf diese Weise wird eine über lange Zeit sichere Abdichtung zwischen dem Anschluss 23 und dem Anschlussadapter 25 erreicht, so dass die sich in der Durchgangsöffnung 47 des Anschlussadapters 25 in und dem Abzweigrohr 34 befindliche Flüssigkeit nicht in die Gewindegänge des Anschlussgewindes 24 gelangen kann.

### BEZUGSZEICHENLISTE

- 20: Flüssigkeitsverteiler
- 21: Hauptleitungsabschnitt
- 22: Gehäuse
- 23: Anschluss
- 24: Anschlussgewinde
- 25: Abzweigleitung (Anschlussadapter)
- 26: Durchgangsöffnung
- 27: Innengewindebohrung
- 28: Innengewinde
- 29: Außengewinde von 25
- 30: Vorsprung
- 31: Ringnut
- 32: Ring-Dichtung
- 33: Verteilerventil
- 34: Abzweigrohr
- 35: Ventilsitz
- 36: Ring-Stirnfläche von 25
- 37: Anlagefläche von 25
- 38: Anlagefläche von 23
- 39: Außenkontur von 22
- 40: Längsachse von 34
- 41: Innenwand von 21
- 42: Längsachse von 21
- 43: Gehäuseöffnung
- 44: Anschlussende von 23
- 46: Einschraubende von 25
- 47: Durchgangsöffnung von 25

## Patentansprüche

1. Flüssigkeitsverteiler (20), insbesondere Wasserverteiler, mit einem einen Hauptleitungsabschnitt (21) umschließenden Gehäuse (22) aus Kunststoff, das einen mit einem Anschlussgewinde (24) versehenen, über die Außenkontur (39) des Gehäuses (22) mit einem Anschlussende (44) nach außen vorstehenden, aus Kunststoff bestehenden, einstückig mit dem aus demselben Kunststoff bestehenden Gehäuse (22) verbundenen Anschluss (23) zum Anschließen einer Abzweigleitung aufweist, der mit einer zum Hauptleitungsabschnitt (21) und zur Abzweigleitung offenen Durchgangsöffnung (26) versehen ist,
**dadurch gekennzeichnet,**
**dass** die Durchgangsöffnung (26) des Anschlusses (23) mit einer Innengewindebohrung (27) gestaltet ist, mit einem einstückig mit dem Gehäuse (22) gebildeten und sich von dem Anschlussende (44) bis unterhalb der Außenkontur (39) des Gehäuses (22) in dieses hinein erstreckenden Innengewinde (28).

2. Flüssigkeitsverteiler nach Anspruch 1, **dadurch gekennzeichnet, dass** der Anschluss (23) und das Gehäuse (22) aus einem thermoplastischen Kunststoff bestehen und in einem Arbeitsgang durch Spritzgießen hergestellt sind.

3. Flüssigkeitsverteiler nach Anspruch 1 oder 2, **dadurch gekennzeichnet, dass** die Innengewindebohrung (27) der Durchgangsöffnung (26) des Anschlusses (23) zum Hauptleitungsabschnitt (21) hin durch einen ringförmigen Vorsprung (30) begrenzt ist, der eine nach außen offene Ringnut (31) zur Aufnahme einer Ring-Dichtung (32) aufweist.

## Claims

1. Liquid distributor (20), particularly water distributor, with a housing (22) of plastics material which encloses a main duct section (21) and which has a connection (23), which is provided with a connecting thread (24) and protrudes outwardly by a connection end (44) beyond the outer profile (39) of the housing (22) and which consists of plastics material and is connected integrally with the housing (22) consisting of the same plastics material, for connection of a branch duct, which is provided with a passage opening (26) open towards the main duct section (21) and the branch duct, **characterised in that** the passage opening (26) of the connection (23) is formed with an internally threaded bore (27) with an internal thread (28) formed integrally with the housing (22) and extending from the connection end (44) into the housing (22) to below the outer profile (39) thereof.

2. Liquid distributor according to claim 1, **characterised in that** the connection (23) and the housing (22) consist of a thermoplastic plastics material and are produced in one working step by injection moulding.

3. Liquid distributor according to claim 1 or 2, **characterised in that** the internally threaded bore (27) of the passage opening (26) of the connection (23) is bounded towards the main duct section (21) by an annular projection (30) which has an outwardly open annular groove (31) for reception of an annular seal (32).

## Revendications

1. Distributeur de liquide (20), en particulier distributeur d'eau avec un boîtier (22) en matériau synthétique entourant une section de conduite principale (21), qui présente un raccord (23) pour le raccordement d'une conduite de branchement, muni d'un filetage de raccordement (24), faisant saillie vers l'extérieur sur le contour extérieur (39) du boîtier (22) avec une extrémité de raccordement (44), réalisé en matériau synthétique, relié en une pièce au boîtier (22) réalisé dans le même matériau synthétique, raccord qui présente une ouverture de passage (26) ouverte vers la section de conduite principale (21) et la conduite de branchement,
**caractérisé**
**en ce que** l'ouverture de passage (26) du raccord (23) présente un taraudage (27), avec un filetage intérieur (28) réalisé en une pièce avec le boîtier (22) et s'étendant depuis l'extrémité de raccordement (44) jusqu'en dessous du contour extérieur (39) du boîtier (22) dans celui-ci.

2. Distributeur de liquide selon la revendication 1, **caractérisé en ce que** le raccord (23) et le boîtier (22) sont constitués d'un matériau synthétique thermoplastique et sont fabriqués en une étape par moulage par injection.

3. Distributeur de liquide selon la revendication 1 ou 2, **caractérisé en ce que** le taraudage (27) de l'ouverture de passage (26) du raccord (23) à la section de conduite principale (21) est limité par une saillie annulaire (30) qui présente une rainure annulaire (31) ouverte vers l'extérieur pour la réception d'un joint d'étanchéité annulaire (32).
